(19)

Europäisches
Patentamt
European
Patent Office
Office européen
des brevets

(11) **EP 1 831 880 B1**

(12) **EUROPEAN PATENT SPECIFICATION**

(45) Date of publication and mention
of the grant of the patent:
**05.11.2008 Bulletin 2008/45**

(51) Int Cl.:
***G11B 7/09*** *(2006.01)*

(21) Application number: **05825450.9**

(22) Date of filing: **15.12.2005**

(86) International application number:
**PCT/IB2005/054264**

(87) International publication number:
**WO 2006/067702 (29.06.2006 Gazette 2006/26)**

(54) **METHOD AND DEVICE FOR ENHANCED ROBUSTNESS OF NEAR-FIELD OPTICAL SYSTEMS**

VERFAHREN UND VORRICHTUNG FÜR ERHÖHTE ROBUSTHEIT VON OPTISCHEN
NAHFELDSYSTEMEN

PROCEDE ET DISPOSITIF DESTINES A AMELIORER LA RESISTANCE DE SYSTEMES OPTIQUES
EN CHAMP PROCHE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.12.2004 EP 04106801**

(43) Date of publication of application:
**12.09.2007 Bulletin 2007/37**

(73) Proprietor: **Koninklijke Philips Electronics N.V.
5621 BA Eindhoven (NL)**

(72) Inventor: **VERSCHUREN, Coen, A.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
- **PATENT ABSTRACTS OF JAPAN vol. 2003, no.
  12, 5 December 2003 (2003-12-05) & JP 2004
  335064 A (SONY CORP), 25 November 2004
  (2004-11-25)**
- **PATENT ABSTRACTS OF JAPAN vol. 2003, no.
  02, 5 February 2003 (2003-02-05) & JP 2002 319157
  A (SONY CORP), 31 October 2002 (2002-10-31)**

## Description

FIELD OF THE INVENTION

The invention relates to near-field optical devices and systems. Such devices are an evolution of current optical systems towards the ability to store greater amounts of data on a record carrier and to facilitate retrieval of densely packed data on such a record carrier.

BACKGROUND OF THE INVENTION

In current optical systems a refractive element is often used to direct and focus light onto a record carrier. Normally this refractive element takes the form of a lens. The numerical aperture (NA) of the lens closest to the record carrier is limited to a value smaller than one. In near-field systems, numerical apertures larger than one can be achieved by using a Solid Immersion Lens (SIL) with high refractive index as part of the refractive element. This larger NA provides a higher optical resolution, i.e. smaller spot size, which in turn allows higher storage capacities on the optical record carrier. In order to maintain this high NA and the corresponding resolution advantage at the record carrier level, the distance between the SIL lens and the record carrier needs to be very small (in the order of 1/10$^{th}$ of the wavelength of the radiation of the light source). For a system with a blue laser (405nm) and a lens with NA=1.9, a typical distance between SIL lens and record carrier (also known as the air gap) is around 25nm. A description of such a near-field system can be found in Proceedings of SPIE (Optical Data Storage 2004), ed. B.V.K. Vijaya Kumar, Vol. 5380, pp 209-223.

In order to monitor and control the distance between the SIL lens and the record carrier, a suitable control signal, known as the Gap Error Signal (GES) was developed. This, together with the corresponding servo methods, has been described and demonstrated in the reference cited above and also in Jpn. J. Appl. Phys. Vol. 42 (2003) pp2719-2724, Part 1, No. 5A, May 2003 and in Technical Digest ISOM/ODS 2002, Hawaii, 7-11 July 2002 ISBN 0-7803-7379-0. The SIL lens approach to the record carrier is carefully controlled with the servo system control being split into three control modes, which are switched from one to the other depending on the operating condition and the distance between the SIL lens and the record carrier. The third mode deals with the situation where the lens and record carrier are closest. In this case, when the lens reaches the desired distance from the record carrier (gap reference), a high-gain PID control system takes over the most critical of the control modes, the controller being designed to maintain the gap reference error within a couple of nm's of target. In this mode, herein also referred to as the "data mode", data can be read or written to the record carrier.

A problem with such a system is that the normal operation is carefully controlled but external disturbances such as shocks, a warped record carrier (outside spec), or some damage or contamination of the record carrier surface, may temporarily give rise to larger variations in the air gap distance than the specified tolerance of a couple of nm's. The type of disturbance caused is likely to take the form of an oscillation, a peak, or a spike, rather than a trend, due to the impulse character of the disturbance. It is a quick effect as opposed to a drift, for example. It may also take the form of a resonance. The servo control mechanism already present is unable to cope with or compensate the effects of the disturbance, and thus degradation of performance or damage to the system will result.

SUMMARY OF THE INVENTION

It is an object of the invention to improve the control of the distance between the refractive element and record carrier so that the record carrier and refractive element are protected, or system performance is maintained, under circumstances where the near-field system is subject to disturbances or impulses which cause the system to be forced out of standard operating conditions.
This object is achieved by providing a method of controlling a distance during a data mode between a refractive element and a record carrier in a near field optical system, comprising steps of:

- Measuring the distance;
- Comparing the distance with a set of thresholds;
- Reacting to adjust the distance according to the result of the step of comparing with the set of thresholds.

It is understood that the term refractive element encompasses many optical elements, which may include a SIL lens for near-field systems, and that the use of the term SIL lens in the description for purposes of explanation does not limit the application of the invention to only a SIL lens.
The set of thresholds can be arranged according to the desired level of system performance or protection. Different pairs or sets of thresholds may be arranged in parallel to satisfy different purposes. Thresholds may be defined in terms of the desired air gap to be maintained and may be placed above or below this value. By implementing a specific reaction to crossing a particular threshold, the best containment action to solve a problem may be implemented as required. The values of the thresholds may be determined by experiment.
In a further embodiment of the invention, the method may be further refined so that the set of one or more thresholds comprises a first pair of thresholds and a second pair of thresholds, each pair comprising one upper and one lower threshold arranged around a chosen value of the refractive element to record carrier distance. Such an arrangement can be set up to provide fine and coarse limits such that one set of limits is triggered by small disturbances while the other set of limits can be only exceeded by serious disturbances which threaten damage to the system.

In a further embodiment of the invention, the upper and lower thresholds of at least one pair of thresholds are arranged symmetrically around the chosen value of the refractive element to record carrier distance. It can be especially advantageous to arrange the thresholds in this way to protect against disturbances where exceeding either the upper or lower boundary of the limits indicates a level of disturbance beyond that considered acceptable. In the case of oscillatory disturbances, or other disturbances where the effects are close to symmetric around the point of origin, symmetric thresholds can be particularly useful.

In a further embodiment of the invention, the first pair of thresholds are arranged at values chosen to apply fine control to the refractive element to record carrier distance. If the disturbance causes only a small variation compared to the air gap distance, the quality of the read signal can be affected, possibly leading to reduced performance. Such variations directly influence spot shape and intensity in the record carrier, thereby also degrading recording performance. If a disturbance is small and limited in time, errors can be partially corrected or even avoided by triggering a response when the appropriate threshold is exceeded. In this way, the performance of the system can be corrected.

In a further embodiment of the invention, the second pair of thresholds is arranged at values chosen to prevent damage to the optical system or record carrier. For a large disturbance it may be possible that the distance between SIL lens and record carrier is reduced to a level where the two components may touch or crash into each other. Choice of appropriate threshold levels can trigger an action to be taken, such as immediate removal of the SIL lens to a safe distance from the record carrier, to ensure safety of the system.

In a further embodiment of the invention, the second pair of thresholds is arranged at values chosen to prevent loss of data from the record carrier. Even in the event that the lens and record carrier do not collide, a severe disturbance may affect the spot quality so that data may not be properly recorded or played back. In such circumstances data loss is possible. Choice of appropriate threshold levels can trigger an action to be taken to ensure the system is kept in optimum operating condition, or that data playback or recording is stopped until the system is returned within normal operating parameters.

In a further embodiment of the invention, the reaction comprises a temporary increase of gain settings of an air gap servo system when the result of the step of comparing is a detection of a distance outside either of the first thresholds. Higher than normal gain settings do improve the suppression of residual errors, but at the expense of servo stability. Thus the use of increased gain settings should be for a limited time only.

In a further embodiment of the invention, the reaction comprises a temporary reduction of record carrier rotation speed when the result of the step of comparing is a detection of a distance outside either of the first thresholds. In general, the higher the record carrier speed, the more noisy the gap error signal and read/write signals become and the wider the distribution of actual distances between SIL lens and record carrier. The bandwidth of the servo system and the lens actuator is limited and the record carrier is not perfectly flat. This makes it difficult to maintain a few nm's distance accurately as the rotation speed increases. A reduction of the record carrier speed can compensate for a disturbance by obtaining a better quality signal while the disturbance passes before going back to normal speed operation when the system has stabilised again.

In a further embodiment of the invention, the reaction comprises a stopping of the air gap servo system, the readout, or the recording process, immediately followed by fast retraction of the refractive element, followed after a pre-set time, by performing a system restart, when the result of the step of comparing is a detection of a distance outside either of the second thresholds. In this case the second thresholds may be set so as to prevent the possibility of contact between SIL lens and record carrier. A detection of crossing such a threshold is a warning of imminent danger of collision and should therefore trigger more radical action, which would eliminate the possibility of damage. By removing the SIL lens to a distance much greater than the normal working distance, the contact between lens and record carrier is avoided. Some time may be allowed for the system to stabilise following the disturbance. After this, the system may be restarted to allow the normal start processes to be run, such as recalibration of positions of elements.

In a further embodiment of the invention, the system restart is accompanied by a temporary reduction in record carrier rotation speed. This refinement of the restart process allows the system to be operated such that the distance between SIL lens and record carrier is even more carefully controlled and the gap signal is less subject to noise. This permits the start process to begin in a strictly controlled manner whereby any further errors can be dealt with while reducing the danger of exceeding critical limits.

In a further embodiment of the invention, the measurement of refractive element to record carrier distance comprises a gap error signal. The gap error signal (GES) is a direct measure of the air gap distance between SIL lens and record carrier. This contains valuable information, which can be used to detect the occurrence and magnitude of disturbances during a read-out or recording operation of the system.

To monitor deviations from the desired air gap, it may be useful to define a $GES_{error}$ as the absolute difference between the desired GES value, $GES_{des}$ corresponding to the desired air gap, and the actual GES value, $GES_{act}$, such that:

$$GES_{error} = abs(GES_{des} - GES_{act})$$

This is a particularly useful concept where the system is exposed to a disturbance of an oscillatory nature. If pairs of symmetrical thresholds have been set around a desired distance value, it does not matter which threshold is exceeded, upper or lower, as the magnitude of the oscillation is the most important information rather than the direction of movement.

The GES may be retrieved as an instantaneous value, or it may be averaged over time.

In a further embodiment of the invention, the method may be extended and applied to read-out mode of the optical system, comprising the following steps performed before the steps of claim 1:

- Searching for a read signal from the record carrier;
- If the read signal is not present, initiating pull-back of the refractive element and restarting the optical system;
- Comparing the read signal quality with a minimum quality value;
- If the read signal is at a level lower than the minimum quality value, initiating pull-back of the refractive element and restarting the optical system;
- If read signal is at or above the minimum quality level, following the method steps as defined in claim 1.

For increased security during read-out, the GES criteria mentioned above can be combined with a check on the reading signal. For example, when, during read-out, the reading signal disappears or becomes smaller than a preset threshold value, this means that either the SIL lens to record carrier distance has become too large, or that the SIL lens has been contaminated or damaged in some unforeseen way. In the first case, the said GES criteria will work normally. In the latter case, however, the GES normalisation is also affected by the contamination or damage of the SIL lens and the GES criteria may not function properly. It makes sense, therefore, to include a check on the reading signal, and pull back the lens to a safe distance from the record carrier if necessary. Before restarting, the GES signal should be checked and re-calibrated while the SIL lens is far away from the record carrier (i.e. at a distance significantly larger than the wavelength of the GES light). This feature helps to prevent further and possibly fatal damage to the lens and also to the record carrier.

According to the invention, a device is claimed for controlling a distance during a data mode between a refractive element and a record carrier in a near field optical system, which comprises:

- means for measuring the distance;
- means for comparing the distance with a set of thresholds;

- means for reacting to adjust the distance according to the result of the step of comparing with the set of thresholds.

The set of thresholds can be arranged according to the desired level of system performance or protection. Different pairs or sets of thresholds may be arranged in parallel to satisfy different purposes. Thresholds may be defined in terms of the desired air gap to be maintained and may be placed above or below this value. By providing means to implement a specific reaction to crossing a particular threshold, the best containment action to solve a problem may be implemented as required. The values of the thresholds may be determined by experiment.

In a further embodiment of the invention, the device also comprises a servo system for air gap control mechanism arranged in connection with the refractive element in the near field optical system. Such a servo system permits accurate placement of the SIL lens with respect to the record carrier, and enables strict control on changes in that distance within specific tolerances under normal operating conditions of the optical system.

In a further embodiment of the invention, there is provided a means for measurement of refractive element to record carrier distance is arranged to comprise a gap error signal. The gap error signal (GES) is a direct measure of the air gap distance between SIL lens and record carrier. This contains valuable information, which can be used to detect the occurrence and magnitude of disturbances during a read-out or recording operation of the system.

To monitor deviations from the desired air gap, it may be useful to define a $GES_{error}$ as the absolute difference between the desired GES value, $GES_{des}$ corresponding to the desired air gap, and the actual GES value, $GES_{act}$, such that:

$$GES_{error} = abs(GES_{des} - GES_{act})$$

This is a particularly useful concept where the system is exposed to a disturbance of an oscillatory nature. If pairs of symmetrical thresholds have been set around a desired distance value, it does not matter which threshold is exceeded, upper or lower, as the magnitude of the oscillation is the most important information rather than the direction of movement.

The GES may be retrieved as an instantaneous value, or it may be averaged over time.

In a further embodiment of the invention, the device comprises the means for threshold set-up and implementation comprises means for storage of a set of threshold values comprising a first pair of thresholds and a second pair of thresholds, each pair comprising one upper and one lower threshold arranged around a chosen value of the refractive element to record carrier distance. Such an arrangement can be set up to provide fine and coarse limits such that one set of limits is triggered by small disturbances while the other set of limits can be only exceeded by serious disturbances which threaten damage to the system.

In a further embodiment of the invention, the device comprises the means for threshold set-up and implementation comprises means for storage of a set of threshold values wherein the upper and lower thresholds of at least one pair of thresholds are arranged symmetrically around the chosen value of the refractive element to record carrier distance. It can be especially advantageous to arrange the thresholds in this way to protect against disturbances where exceeding either the upper or lower boundary of the limits indicates a level of disturbance beyond that considered acceptable. In the case of oscillatory disturbances, or other disturbances where the effects are close to symmetric around the point of origin, symmetric thresholds can be particularly useful.

In a further embodiment of the invention, the means for threshold set-up and implementation comprises threshold set-up such that the first pair of thresholds are arranged at values chosen to apply fine control to the refractive element to record carrier distance. If the disturbance causes only a small variation compared to the air gap distance, the quality of the read signal can be affected, possibly leading to reduced performance. Such variations directly influence spot shape and intensity in the record carrier, thereby also degrading recording performance. If a disturbance is small and limited in time, errors can be partially corrected or even avoided by triggering a response when the appropriate threshold is exceeded. In this way, the performance of the system can be corrected.

In a further embodiment of the invention, the means for threshold set-up and implementation comprises threshold set-up such that the second pair of thresholds is arranged at values chosen to prevent damage to the optical system or record carrier. For a large disturbance it may be possible that the distance between SIL lens and record carrier is reduced to a level where the two components may touch or crash into each other. Choice of appropriate threshold levels can trigger an action to be taken, such as immediate removal of the SIL lens to a safe distance from the record carrier, to ensure safety of the system.

In a further embodiment of the invention, the means for threshold set-up and implementation comprises threshold set-up such that the second pair of thresholds is arranged at values chosen to prevent loss of data from the record carrier. Even in the event that the lens and record carrier do not collide, a severe disturbance may affect the spot quality so that data may not be properly recorded or played back. In such circumstances data loss is possible. Choice of appropriate threshold levels can trigger an action to be taken to ensure the system is kept in optimum operating condition, or that data playback or recording is stopped until the system is returned within normal operating parameters.

In a further embodiment of the invention, the means for reacting comprises a reaction comprising a temporary increase of gain settings of an air gap servo system when the result of the step of comparing is a detection of a distance outside either of the first thresholds. Higher than normal gain settings do improve the suppression of residual errors, but at the expense of servo stability. Thus the use of increased gain settings should be for a limited time only.

In a further embodiment of the invention, the means for reacting comprises a reaction comprising a temporary reduction of record carrier rotation speed when the result of the step of comparing is a detection of a distance outside either of the first thresholds. In general, the higher the record carrier speed, the more noisy the gap error signal and read/write signals become and the wider the distribution of actual distances between SIL lens and record carrier. The bandwidth of the servo system and the lens actuator is limited and the record carrier is not perfectly flat. This makes it difficult to maintain a few nm's distance accurately as the rotation speed increases. A reduction of the record carrier speed can compensate for a disturbance by obtaining a better quality signal while the disturbance passes before going back to normal speed operation when the system has stabilised again.

In a further embodiment of the invention, the means for reacting comprises a reaction comprising a stopping of the air gap servo system, the readout, or the recording process, immediately followed by fast retraction of the refractive element, followed after a pre-set time, by performing a system restart, when the result of the step of comparing is a detection of a distance outside either of the second thresholds. In this case the second thresholds may be set so as to prevent the possibility of contact between SIL lens and record carrier. A detection of crossing such a threshold is a warning of imminent danger of collision and should therefore trigger more radical action, which would eliminate the possibility of damage. By removing the SIL lens to a distance much greater than the normal working distance, the contact between lens and record carrier is avoided. Some time may be allowed for the system to stabilise following the disturbance. After this, the system may be restarted to allow the normal start processes to be run, such as recalibration of positions of elements.

In a further embodiment of the invention, the means for reacting comprises a reaction wherein the system restart is accompanied by a temporary reduction in record carrier rotation speed. This refinement of the restart process allows the system to be operated such that the distance between SIL lens and record carrier is even more carefully controlled and the gap signal is less subject to noise. This permits the start process to begin in a strictly controlled manner whereby any further errors can be dealt with while reducing the danger of exceeding critical limits.

BRIEF DESCRIPTION OF THE DRAWINGS

These and other aspects of the method and device will be further elucidated with reference to the drawings, in which:

Fig. 1 is a flowchart of a method according to the invention.
Fig. 2 is a flowchart of a method according to the invention for read-out operation.
Fig. 3 illustrates a device according to the invention.
Fig. 4 is a device diagram of an embodiment of the invention.

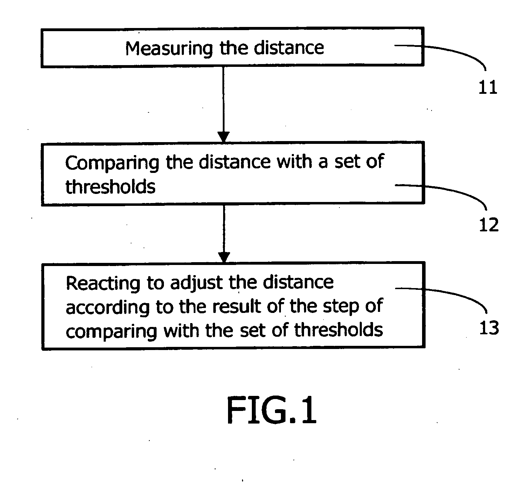

Fig. 1 illustrates the method according to the invention. In the first step 11 the distance between the refractive element, a SIL lens for example, and the optical record carrier or record carrier is determined. This may be done by utilising a gap error signal (GES) or other method for determining distance. In order to decide if the distance measured is within the range desired for optimum functioning and safety of the optical system, the measured distance must be compared with one or more thresholds 12. These thresholds can be predetermined by experiment and then programmed into the device. The level, number, and positioning of the thresholds depends on the function they provide to protect the device or improve stability of operation. Once the comparison 12 is finished, it is clear if the measured distance is outside or inside the prescribed threshold boundaries. If the distance is within limits, operation can continue. If not, it is necessary to react 13 to correct the position of the refractive element. The reaction chosen will depend on which thresholds have been exceeded and the level of impact this has on the device operation and device hardware.

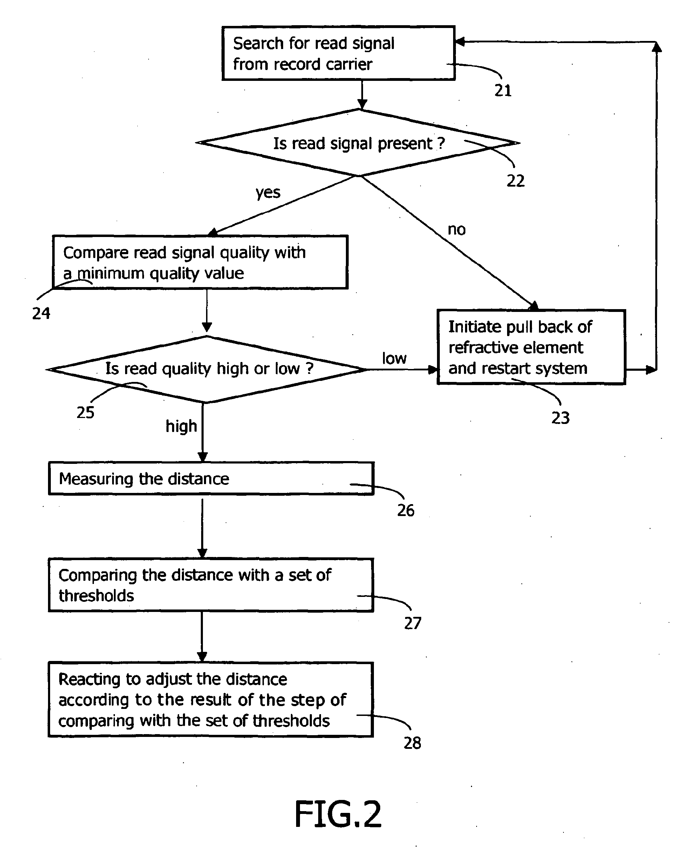

Fig. 2 presents a related method according to the invention. This method is applicable for read operations. The read signal is here used as an additional check on system operation. The measurement of the distance between refractive element and record carrier may itself be subject to problems, if the record carrier is contaminated for example the GES may also be affected. The measurement may not give a true reflection of distance, and therefore the effectiveness of the threshold method will be reduced. The read signal, however, has an origin independent of that of the GES and can act as an independent monitor. Incorporation of this monitor into the method according to the invention begins with a search to detect the read signal 21. It must then be determined if the read signal has been found 22.

If the read signal is not present, a pull back of the refractive element must be initiated to protect the system, followed by a restart of the system wherein the start up procedure can be re-run and system elements recalibrated 23. It is then possible to begin the procedure again 21.

If a read signal is present, a comparison with a minimum read signal quality must first be performed 24 and the quality of the signal must be assessed 25. For poor quality signals, the element pull back and system restart should be initiated 23. It is then possible to begin the procedure again 21. For sufficiently high read signal quality, the method as described above is initiated. The distance between refractive element is measured 26, compared with previously determined thresholds 27 and the appropriate reaction to the results of the comparison is taken 28.

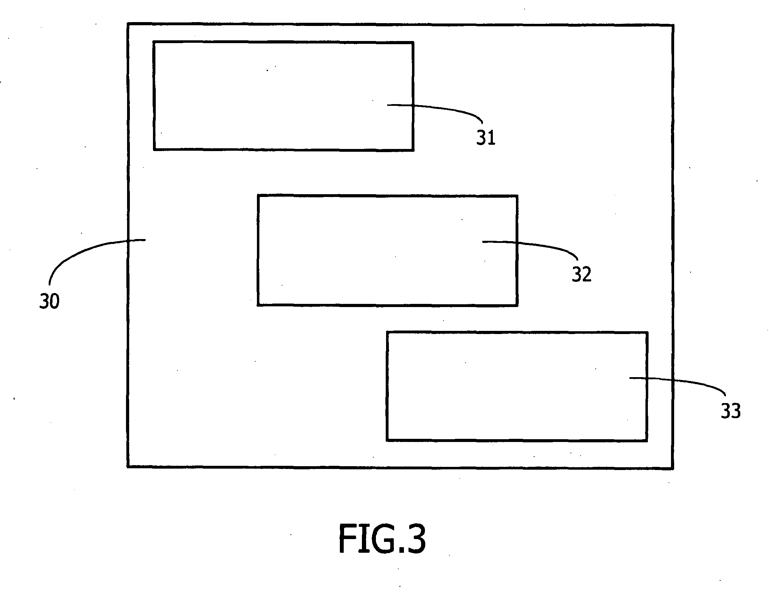

Fig. 3 illustrates a device according to the invention. The device 30 comprises means for measuring the distance between a refractive element and a record carrier in a near field optical system 31, means for comparing the distance with a threshold or set of thresholds which have been predetermined 32 and means for reacting to adjust the distance according to the result of the step of comparing with the thresholds 33.

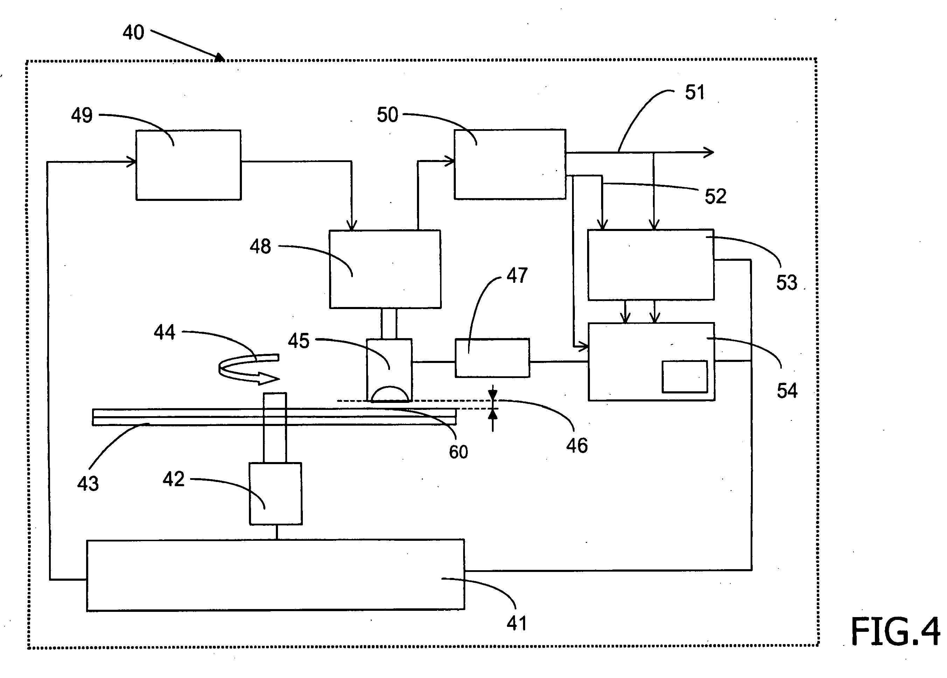

Fig. 4 illustrates a device which embodies the invention. The device 40 forms part of a near-field optical system. The device consists of a control unit 41 which is connected to a motor control 42 upon which rests a chuck 43 where a record carrier 60 can be placed. The record carrier 60 can be caused to rotate 44 during reading and writing operations of the optical system. Above the record carrier, the refractive element of the near-field system is contained in the head assembly 45. The head is positioned above the record carrier at a specific distance 46 by the servo unit 47. Light incident on the record carrier originates from the Front end unit 48, which contains laser, optics, detectors etc, and which receives operational instructions from the control unit 41 via a unit where inputs are formatted and modulated 49.

Output from the Front end unit 48 is fed into the Signal processing unit 50. This output contains, among other things, readout data and gap error signal (GES) distance measurements. Readout data 51 is directed towards a separate subsystem. GES 52 is fed into the threshold unit according to the invention 53. This threshold unit comprises one or more threshold values which have been predetermined and programmed into the unit. In addition the programming contains appropriate reactions which must be implemented if any of the measured distances are outside the threshold values. Comparison between measured distances and thresholds takes place and the appropriate reaction is chosen if necessary. This information is then fed into the Air gap control unit 54 which acts to implement the chosen reaction by controlling the servo unit 47, which in turn controls the head 45 containing the refractive element.

LIST OF FIGURE REFERENCES:

| | |
|---|---|
| 11 to 13 | flow chart modules according to the method of the invention |
| 21 to 28 | flow chart modules according to the method |

of the invention for read out operation

30      a device according to the invention

31      means for measuring the distance

32      means for comparing the distance with a set of thresholds

33      means for reacting to adjust the distance according to the result of the step of comparing with the set of thresholds

40      device

41      control unit

42      motor control

43      chuck

44      rotation

45      head assembly

46      distance between head and record carrier

47      servo unit

48      front end unit

49      unit to format and modulate inputs

50      signal processing unit

51      readout data

52      gap error signal (GES)

53      threshold unit according to the invention

54      air gap control unit

60      record carrier

**Claims**

1. Method of controlling a distance during a data mode between a refractive element and a record carrier (60) in a near field optical system (40), comprising steps of:

    - measuring the distance (11);
    - comparing the distance with a set of thresholds (12);
    - reacting to adjust the distance according to the result of the step of comparing with the set of thresholds (13).

2. A method as claimed in claim 1 wherein the set of one or more thresholds comprises a first pair of thresholds and a second pair of thresholds, each pair comprising one upper and one lower threshold arranged around a chosen value of the refractive element to record carrier (60) distance.

3. A method as claimed in claim 2 wherein the upper and lower thresholds of at least one pair of thresholds are arranged symmetrically around the chosen value of the refractive element to record carrier (60) distance.

4. A method as claimed in claim 2 or 3 wherein the first pair of thresholds are arranged at values chosen to apply fine control to the refractive element to record carrier (60) distance.

5. A method as claimed in claim 2 or 3 wherein the second pair of thresholds are arranged at values chosen to prevent damage to the optical system (40) or record carrier (60).

6. A method as claimed in claim 2 or 3 wherein the second pair of thresholds are arranged at values chosen to prevent loss of data from the record carrier (60).

7. A method as claimed in claim 2 or 3 wherein the reaction (13) comprises a temporary increase of gain settings of an air gap servo system (47) when the result of the step of comparing is a detection of a distance outside either of the first thresholds.

8. A method as claimed in claim 2 or 3 wherein the reaction (13) comprises a temporary reduction of record carrier rotation speed when the result of the step of comparing is a detection of a distance outside either of the first thresholds.

9. A method as claimed in claim 2 or 3 wherein the reaction (13) comprises a stopping of the air gap servo system (47), the readout, or the recording process, immediately followed by fast retraction of the refractive element, followed after a pre-set time, by performing a system restart, when the result of the step of comparing is a detection of a distance outside either of the second thresholds.

10. A method as claimed in claim 9, wherein the system restart is accompanied by a temporary reduction in record carrier rotation speed.

11. A method as claimed in claim 1, wherein the measurement of refractive element to record carrier distance comprises a gap error signal (52).

12. A method as in claim 1, applied to read-out mode of the optical system, comprising the following steps performed before the steps of claim 1:

    - searching for a read signal from the record carrier (21);
    - if the read signal is not present, initiating pullback of the refractive element and restarting the optical system (23);
    - comparing the read signal quality with a minimum quality value (24);
    - if the read signal is at a level lower than the minimum quality value (25), initiating pull-back of the refractive element and restarting the optical system (23);
    - if read signal is at or above the minimum quality level (25), following the method steps as defined in claim 1 (26, 27, 28).

**13.** A device (30) for controlling a distance during a data mode between a refractive element and a record carrier in a near field optical system, comprises:

- means for measuring the distance (31);
- means for comparing the distance with a set of thresholds (32);
- means for reacting to adjust the distance according to the result of the step of comparing with the set of thresholds (33).

**14.** A device as claimed in claim 13, which also comprises a servo system (47) for air gap control mechanism (54) arranged in connection with the refractive element in the near field optical system (40).

**15.** A device as claimed in claim 13, wherein a means for measurement of refractive element to record carrier (60) distance is arranged to comprise a gap error signal (52).

**16.** A device as claimed in claim 13, wherein the means for threshold set-up and implementation comprises means for storage of a set of threshold values comprising a first pair of thresholds and a second pair of thresholds, each pair comprising one upper and one lower threshold arranged around a chosen value of the refractive element to record carrier (60) distance.

**17.** A device as claimed in claim 16, wherein the means for threshold set-up and implementation comprises means for storage of a set of threshold values wherein the upper and lower thresholds of at least one pair of thresholds are arranged symmetrically around the chosen value of the refractive element to record carrier (60) distance.

**18.** A device as claimed in claims 16 or 17, wherein the first pair of thresholds are arranged at values chosen to apply fine control to the refractive element to record carrier (60) distance.

**19.** A device as claimed in claims 16 or 17 wherein the second pair of thresholds are arranged at values chosen to prevent damage to the optical system (40) or record carrier (60).

**20.** A device as claimed in claims 16 or 17, wherein the second pair of thresholds are arranged at values chosen to prevent loss of data from the record carrier (60).

**21.** A device as claimed in claims 16 or 17, wherein the reaction comprises a temporary increase of gain settings of an air gap servo system (47) when the result of the step of comparing is a detection of a distance outside either of the first thresholds.

**22.** A device as claimed in claims 16 or 17, wherein the reaction comprises a temporary reduction of record carrier rotation speed when the result of the step of comparing is a detection of a distance outside either of the first thresholds.

**23.** A device as claimed in claims 16 or 17, wherein the reaction comprises a stopping of the air gap servo system (47), the readout, or the recording process, immediately followed by fast retraction of the refractive element, followed after a pre-set time, by performing a system restart, when the result of the step of comparing is a detection of a distance outside either of the second thresholds.

**24.** A device as claimed in claim 23, wherein the system restart is accompanied by a temporary reduction in record carrier rotation speed.

**Patentansprüche**

**1.** Verfahren zur Steuerung eines Abstandes während einer Datenmode zwischen einem lichtbrechenden Element und einem Aufzeichnungsträger (60) in einem optischen Nahfeldsystem (40), wobei dieses Verfahren die nachfolgenden Verfahrensschritte umfasst:

- das Messen des Abstandes (11);
- das Vergleichen des Abstandes mit einem Satz von Schwellen (12);
- das Reagieren zum Einstellen des Abstandes entsprechend dem Ergebnis des Verfahrensschrittes des Vergleichs mit dem Schwellensatz (13).

**2.** Verfahren nach Anspruch 1, wobei der Satz von einem oder mehreren Schwellen ein erstes Schwellenpaar und ein zweites Schwellenpaar umfasst, wobei jedes Paar eine obere und eine untere Schwelle aufweist, vorgesehen um einen gewählten Wert des Abstandes des lichtbrechenden Elementes von dem Aufzeichnungsträger (60).

**3.** Verfahren nach Anspruch 2, wobei die obere und die untere Schwelle wenigstens eines Schwellenpaares symmetrisch um den gewählten Wert des Abstandes des lichtbrechenden Elementes von dem Aufzeichnungsträger (60) vorgesehen sind.

**4.** Verfahren nach Anspruch 2 oder 3, wobei das erste Schwellenpaar bei Werten vorgesehen ist, gewählt zum Anwenden einer Feinregelung auf den Abstand des lichtbrechenden Elementes von dem Aufzeichnungsträger (60).

**5.** Verfahren nach Anspruch 2 oder 3, wobei das zweite Schwellenpaar bei Werten vorgesehen ist, gewählt zur Vermeidung einer Beschädigung des optischen Systems (40) oder des Aufzeichnungsträgers (60).

6. Verfahren nach Anspruch 2 oder 3, wobei das zweite Schwellenpaar bei Werten vorgesehen ist, gewählt zur Vermeidung von Datenverlust von dem Aufzeichnungsträger (60).

7. Verfahren nach Anspruch 2 oder 3, wobei die Reaktion (13) eine einstweilige Zunahme der Verstärkungseinstellungen eines Luftspaltservosystems (47), wenn das Ergebnis des Verfahrensschrittes des Vergleichs eine Detektion des Abstandes außerhalb einer von beiden ersten Schwellen.

8. Verfahren nach Anspruch 2 oder 3, wobei die Reaktion (13) eine vorübergehende Reduktion der Drehgeschwindigkeit des Aufzeichnungsträgers umfasst, wenn das Ergebnis des Vergleichs eine Detektion eines Abstandes außerhalb einer der beiden ersten Schwellen ist.

9. Verfahren nach Anspruch 2 oder 3, wobei die Reaktion (13) ein Anhalten des Luftspaltservosystems (47), der Ausleseprozess oder der Aufzeichnungsprozess ist, wonach ein schnelles Zurückziehen des lichtbrechenden Elementes unmittelbar folgt, und zwar nach einer voreingestellten Zeit, indem ein Neustart des Systems stattfindet, wenn das Ergebnis des Vergleichsschrittes eine Detektion eines Abstandes außerhalb einer der beiden zweiten Schwellen ist.

10. Verfahren nach Anspruch 9, wobei der Neustart des Systems mit einer vorübergehenden Reduktion der Drehgeschwindigkeit des Aufzeichnungsträgers einher geht.

11. Verfahren nach Anspruch 1, wobei die Messung des Abstandes des lichtbrechenden Elementes von dem Aufzeichnungsträger ein Spaltfehlersignal (52) umfasst.

12. Verfahren nach Anspruch 1, angewandt auf die Auslesemode des optischen Systems, wobei dieses Verfahren die nachfolgenden Verfahrensschritte umfasst, die vor den Verfahrensschritte nach Anspruch 1 durchgeführt werden:

  - das Suchen nach einem Auslesesignal von dem Aufzeichnungsträger (21);
  - wenn das Auslesesignal nicht vorhanden ist, das Auslösen eines Zurückziehvorgangs des lichtbrechenden Elementes und eines Neustarts des optischen Systems (23);
  - das Vergleichen der Qualität des Auslesesignals mit einem minimalen Qualitätswert (24);

  - wenn das Auslesesignal auf einem Pegel liegt, der niedriger ist als der minimale Qualitätswert (25), das Auslösen eines Zurückziehvorgangs des lichtbrechenden Elementes und eines Neustarts des optischen Systems (23);
  - wenn das Auslesesignal auf dem minimalen Qualitätspegel (25) oder über demselben liegt, das Durchführen der Verfahrensschritte, wie in Anspruch 1 definiert (26, 27, 28).

13. Anordnung (30) zur Steuerung eines Abstandes während einer Datenmode zwischen einem lichtbrechenden Element und einem Aufzeichnungsträger in einem optischen Nahfeldsystem, wobei diese Anordnung Folgendes umfasst:

  - Mittel zum Messen des Abstandes (31);
  - Mittel zum Vergleichen des Abstandes mit einem Satz von Schwellen (32);
  - Mittel zum reagieren auf die Einstellung des Abstandes entsprechend dem Ergebnis des Vergleichsschrittes mit dem Satz von Schwellen (33).

14. Anordnung nach Anspruch 13, die ebenfalls ein Servosystem (47) für den Luftspaltsteuermechanismus (54) aufweist, vorgesehen im Zusammenhang mit dem lichtbrechenden Element in dem optischen Nahfeldsystem (40).

15. Anordnung nach Anspruch 13, wobei ein Mittel zum Messen des Abstandes des lichtbrechenden Elementes von dem Aufzeichnungsträger (60) dazu vorgesehen ist, ein Luftspaltfehlersignal (52) zum schaffen.

16. Anordnung nach Anspruch 13, wobei das Mittel zum Aufstellen und Implementieren von Schwellen Mittel aufweist zur Speicherung eines Satzes von Schwellenwerten, mit einem ersten Schwellenpaar und einem zweiten Schwellenpaar, wobei jedes Paar eine obere und eine untere Schwelle aufweist, vorgesehen um einen gewählten Wert des Abstandes des lichtbrechenden Elementes von dem Aufzeichnungsträger (60) herum.

17. Anordnung nach Anspruch 16, wobei das Mittel zum Aufstellen und Implementieren Mittel aufweist zur Speicherung eines Satzes von Schwellenwerten, wobei die obere und die untere Schwelle wenigstens eines Schwellenpaares symmetrisch um den gewählten Wert des Abstandes des lichtbrechenden Elementes von dem Aufzeichnungsträger (60) vorgesehen sind.

18. Anordnung nach Anspruch 16 oder 17, wobei das erste Schwellenpaar bei Werten vorgesehen ist, gewählt zum Anwenden einer Feinregelung des Abstandes des lichtbrechenden Elementes von dem Aufzeichnungsträger (60).

**19.** Anordnung nach Anspruch 16 oder 17, wobei das zweite Schwellenpaar bei Werten vorgesehen ist, gewählt zur Vermeidung einer Beschädigung des optischen Systems (40) oder des Aufzeichnungsträgers (60).

**20.** Anordnung nach Anspruch 16 oder 17, wobei das zweite Schwellenpaar bei Werten vorgesehen ist, gewählt zur Vermeidung von Datenverlust von dem Aufzeichnungsträger (60).

**21.** Anordnung nach Anspruch 16 oder 17, wobei die Reaktion eine vorübergehende Zunahme der Verstärkungseinstellungen eines Luftspaltservosystems (47)ist, wenn das Ergebnis des Vergleichsschrittes eine Detektion eines Abstandes außerhalb einer der beiden ersten Schwellen ist.

**22.** Anordnung nach Anspruch 16 oder 17, wobei die Reaktion eine vorübergehende Reduktion der Drehzahl des Aufzeichnungsträgers ist, wenn das Ergebnis des Vergleichsschrittes eine Detektion eines Abstandes außerhalb einer der beiden ersten Schwellen ist.

**23.** Anordnung nach Anspruch 16 oder 17, wobei die Reaktion ein Anhalten des Luftspaltsefvosystems (47), des Auslesevorgangs, oder des Aufzeichnungsprozesses ist, wonach unmittelbar ein schneller Rückzug des lichtbrechenden Elementes folgt, wonach, nach einer voreingestellten Zeit ein Neustart des Systems auftritt, wenn das Ergebnis des Vergleichsschrittes eine Detektion eines Abstandes außerhalb einer der beiden zweiten Schwellen ist.

**24.** Anordnung nach Anspruch 23, wobei der Neustart des Systems mit einer vorübergehenden Reduktion der Drehzahl des Aufzeichnungsträgers einher geht.

**Revendications**

**1.** Procédé permettant de commander une distance pendant un mode de données entre un élément de réfraction et un support d'enregistrement (60) dans un système optique en champ proche (40), comprenant les étapes suivantes :

- la mesure de la distance (11);
- la comparaison de la distance à un ensemble de seuils (12);
- la réaction pour régler la distance selon le résultat de l'étape de comparaison à l'ensemble de seuils (13).

**2.** Procédé suivant la revendication 1, dans lequel l'ensemble d'un ou de plusieurs seuils comprend une première paire de seuils et une deuxième paire de seuils, chaque paire comprenant un seuil supérieur et un seuil inférieur fixés autour d'une valeur choisie de la distance entre l'élément de réfraction et le support d'enregistrement (60).

**3.** Procédé suivant la revendication 2, dans lequel les seuils supérieur et inférieur d'au moins une paire de seuils sont fixés symétriquement autour de la valeur choisie de la distance entre l'élément de réfraction et le support d'enregistrement (60).

**4.** Procédé suivant la revendication 2 ou 3, dans lequel la première paire de seuils est fixée à des valeurs choisies pour commander avec précision la distance entre l'élément de réfraction et le support d'enregistrement (60).

**5.** Procédé suivant la revendication 2 ou 3, dans lequel la deuxième paire de seuils est fixée à des valeurs choisies pour éviter des dommages au système optique (40) ou au support d'enregistrement (60).

**6.** Procédé suivant la revendication 2 ou 3, dans lequel la deuxième paire de seuils est fixée à des valeurs choisies pour éviter la perte de données du support d'enregistrement (60).

**7.** Procédé suivant la revendication 2 ou 3, dans lequel la réaction (13) comprend un accroissement temporaire des réglages de gain d'un système d'asservissement d'entrefer (47) lorsque le résultat de l'étape de comparaison est une détection d'une distance en dehors de l'un des premiers seuils.

**8.** Procédé suivant la revendication 2 ou 3, dans lequel la réaction (13) comprend une réduction temporaire d'une vitesse de rotation du support d'enregistrement lorsque le résultat de l'étape de comparaison est une détection d'une distance en dehors de l'un des premiers seuils.

**9.** Procédé suivant la revendication 2 ou 3, dans lequel la réaction (13) comprend un arrêt du système d'asservissement d'entrefer (47), de la lecture ou du processus d'enregistrement, immédiatement suivi d'un retrait rapide de l'élément de réfraction, suivi après un laps de temps prédéfini de l'exécution d'un redémarrage du système, lorsque le résultat de l'étape de comparaison est une détection d'une distance en dehors de l'un des deuxièmes seuils.

**10.** Procédé suivant la revendication 9, dans lequel le redémarrage du système s'accompagne d'une réduction temporaire de la vitesse de rotation du support d'enregistrement.

**11.** Procédé suivant la revendication 1, dans lequel la mesure de la distance entre l'élément de réfraction et le support d'enregistrement comprend un signal d'erreur d'écartement (52).

**12.** Procédé suivant la revendication 1, appliqué au mode lecture du système optique, comprenant les étapes suivantes exécutées avant les étapes de la revendication 1 :

- la recherche d'un signal de lecture venant du support d'enregistrement (21);
- si le signal de lecture n'est pas présent, le commencement du rappel de l'élément de réfraction et le redémarrage du système optique (23);
- la comparaison de la qualité du signal de lecture à une valeur de qualité minimum (24);
- si le signal de lecture est à un niveau inférieur à la valeur de qualité minimale (25), le commencement du retrait de l'élément de réfraction et le redémarrage du système optique (23);
- si le signal de lecture est au niveau de qualité minimum (25) ou au-dessus de celui-ci, l'exécution des étapes du procédé suivant la revendication 1 (26, 27, 28).

**13.** Dispositif (30) permettant de commander une distance pendant un mode de données entre un élément de réfraction et un support d'enregistrement dans un système optique en champ proche, comprenant :

- un moyen pour mesurer la distance (31);
- un moyen pour comparer la distance à un ensemble de seuils (32);
- un moyen pour réagir pour régler la distance selon le résultat de l'étape de comparaison à l'ensemble de seuils (33).

**14.** Dispositif suivant la revendication 13, qui comprend également un système d'asservissement (47) pour un mécanisme de commande d'entrefer (54) monté relativement à l'élément de réfraction dans le système optique en champ proche (40).

**15.** Dispositif suivant la revendication 13, dans lequel un moyen pour mesurer la distance entre l'élément de réfraction et le support d'enregistrement (60) est à même de comprendre un signal d'erreur d'écartement (52).

**16.** Dispositif suivant la revendication 13, dans lequel le moyen de fixation et d'application de seuil comprend un moyen de stockage d'un ensemble de valeurs de seuil comprenant une première paire de seuils et une deuxième paire de seuils, chaque paire comprenant un seuil supérieur et un seuil inférieur fixés autour d'une valeur choisie de la distance entre l'élément de réfraction et le support d'enregistrement (60).

**17.** Dispositif suivant la revendication 16, dans lequel le moyen de fixation et d'application de seuil comprend un moyen pour le stockage d'un ensemble de valeurs de seuil dans lequel les seuils supérieur et inférieur d'au moins une paire de seuils sont fixés symétriquement autour de la valeur choisie de la distance entre l'élément de réfraction et le support d'enregistrement (60).

**18.** Dispositif suivant la revendication 16 ou 17, dans lequel la première paire de seuils sont fixés à des valeurs choisies pour commander avec précision la distance entre l'élément de réfraction et le support d'enregistrement (60).

**19.** Dispositif suivant la revendication 16 ou 17, dans lequel la deuxième paire de seuils sont fixés à des valeurs choisies pour éviter des dommages au système optique (40) ou au support d'enregistrement (60).

**20.** Dispositif suivant la revendication 16 ou 17, dans lequel la deuxième paire de seuils sont fixés à des valeurs choisies pour éviter la perte de données du support d'enregistrement (60).

**21.** Dispositif suivant la revendication 16 ou 17, dans lequel la réaction comprend un accroissement temporaire des réglages de gain d'un système d'asservissement d'entrefer (47) lorsque le résultat de l'étape de comparaison est une détection d'une distance en dehors de l'un des premiers seuils.

**22.** Dispositif suivant la revendication 16 ou 17, dans lequel la réaction comprend une réduction temporaire d'une vitesse de rotation du support d'enregistrement lorsque le résultat de l'étape de comparaison est une détection d'une distance en dehors de l'un des premiers seuils.

**23.** Dispositif suivant la revendication 16 ou 17, dans lequel la réaction comprend un arrêt du système d'asservissement d'entrefer (47), de la lecture ou du processus d'enregistrement, immédiatement suivi d'un retrait rapide de l'élément de réfraction, suivi après un laps de temps prédéfini de l'exécution d'un redémarrage du système, lorsque le résultat de l'étape de comparaison est une détection d'une distance en dehors de l'un des deuxièmes seuils.

**24.** Dispositif suivant la revendication 23, dans lequel le redémarrage du système s'accompagne d'une réduction temporaire de la vitesse de rotation du support d'enregistrement.

```
┌─────────────────────────────────────────────┐
│           Measuring the distance            ─┼──────╮
└─────────────────────────────────────────────┘       ╲
                       │                              11
                       ▼
┌─────────────────────────────────────────────┐
│  Comparing the distance with a set of        │
│  thresholds                                 ─┼──────╮
└─────────────────────────────────────────────┘       ╲
                       │                              12
                       ▼
┌─────────────────────────────────────────────┐
│  Reacting to adjust the distance             │
│  according to the result of the step of      │
│  comparing with the set of thresholds        │      13
└─────────────────────────────────────────────┘
```

# FIG.1

Search for read signal
from record carrier

21

Is read signal present ?

22

yes

no

Compare read signal quality with
a minimum quality value

24

Is read quality high or low ?

low

Initiate pull back of
refractive element
and restart system

25

23

high

Measuring the distance

26

Comparing the distance with a set of
thresholds

27

Reacting to adjust the distance
according to the result of the step of
comparing with the set of thresholds

28

# FIG.2

FIG.3

EP 1 831 880 B1

FIG.4

EP 1 831 880 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Proceedings of SPIE. 2004, vol. 5380, 209-223
- *Jpn. J. Appl. Phys.,* 2003, vol. 42 (5A), 2719-2724
- Technical Digest ISOM/ODS 2002. 07 July 2002